# EUROPÄISCHE PATENTSCHRIFT

(11) **EP 0 947 666 B1**
(45) Veröffentlichungstag und Bekanntmachung des Hinweises auf die Patenterteilung: **31.03.2004**
(21) Anmeldenummer: 99103497.6
(22) Anmeldetag: 24.02.1999
(51) Int. Cl.: F01D 9/04

(54) **Gebauter Leitkranz für ein Gasturbinentriebwerk, sowie Verfahren zu seiner Herstellung**
Assembled stator ring for a gas turbine engine and method of manufacture therefor
Anneau des aubes de guidage pour un turboréacteur et sa méthode de fabrication

(30) Priorität: 28.03.1998 DE 19813958
(43) Veröffentlichungstag der Anmeldung: 06.10.1999
(73) Patentinhaber: MTU Aero Engines GmbH, 80995 München (DE)
(72) Erfinder: Knott, Ulrich, Dr., 80997 München (DE); Böttcher, Siegfried, 85764 Oberschleissheim (DE); Manier, Karlheinz, 85298 Mitterscheyern (DE); Humhauser, Werner, 85358 Moosburg (DE); Richter, Karl-Hermann, Dr., 85229 Markt Indersdorf (DE); Reischl, Josef, 85241 Hebertshausen (DE); Schmuhl, Hans-Jürgen, 82237 Wörthsee (DE); Breitschwerdt, Klaus, 85232 Lauterbach (DE)
(74) Vertreter: Einsele, Rolf W.

(56) Entgegenhaltungen:
- DE-A- 4 203 655
- US-A- 4 509 238
- US-A- 4 643 636
- US-A- 5 174 715
- US-A- 5 474 419

## Beschreibung

Die Erfindung betrifft einen gebauten Leitkranz für eine Gasturbine sowie ein Herstellungsverfahren für einen gebauten Leitkranz einer Gasturbine, insbesondere eines Flugtriebwerks, bei dem wenigstens ein Deckband und wenigstens ein Schaufelblatt vorgesehen wird.

Gebaute Leitkränze sind integrale Bauteile, die im allgemeinen ein ringförmiges Außendeckband, eine Vielzahl von Schaufelblättern und ggf. ein ringförmiges Innendeckband umfassen. Gebaute Leitkränze werden z.B. in Hoch- oder Niederdruckverdichtern von Flugtriebwerken eingesetzt.

Bei einem herkömmlichen Herstellungsverfahren werden zunächst aus einem Schaufelblatt und einer äußeren Plattform bestehende, einstückige Leitschaufeln durch Schmieden, Gießen oder ECM hergestellt. Anschließend werden im allgemeinen vier bis sechs derartiger Leitschaufeln zu Segmenten zusammengelötet. Nachteilig bei einem solchen Verfahren sind die vergleichsweise hohen Herstellungskosten.

Die US 4 509 238 A schützt ein Verfahren zur Herstellung eines gebauten Leitkranzes für eine Dampfturbine. Dabei werden in zwei koaxiale Deckbänder des Leitkranzes profilierte Durchbrüche geschnitten, in welche die Schaufelblätter eingesetzt und eingeschweißt werden. Die Durchbrüche werden bevorzugt durch Laserschneiden gefertigt. Die Schaufeln und Durchbrüche sind bevorzugt zweidimensional profiliert, so dass die Schaufeln radial von außen durch bzw. in die Durchbrüche beider Deckbänder gesteckt werden können.

Die US 5 474 419 A betrifft einen gebauten Leitkranz für eine Turbine. Dabei sind dreidimensional geformte Schaufelblätter an beiden Enden mit zweidimensional profilierten Verbindungsbereichen versehen, die in korrespondierende, zweidimensionale Durchbrüche eines inneren und eines äußeren Deckbandes gesteckt werden können. Der äußere Durchbruch ist so groß gewählt dass der dreidimensionale Schaufelblattbereich in gerader, radialer Bewegung einführbar ist. Die Verbindung erfolgt durch Schweißen.

Die Aufgabe der vorliegenden Erfindung besteht darin, ein Herstellungsverfahren für einen gebauten Leitkranz einer Gasturbine der eingangs beschriebenen Gattung mit erhöhter mechanischer Belastbarkeit zu schaffen, das möglichst einfach und kostengünstig durchgeführt werden kann. Des weiteren soll ein kostengünstig herzustellender gebauter Leitkranz mit höherer Belastbarkeit geschaffen werden.

Die das Herstellungsverfahren betreffende Lösung der Aufgabe ist erfindungsgemäß durch die Schritte gekennzeichnet: Vorsehen einer Stützplatte an der dem Schaufelblatt abgewandten Seitenfläche des Deckbands, Ausbilden eines mit dem profilierten Durchbruch in dem Deckband fluchtenden, profilierten Durchbruchs in der Stützplatte, Einfügen des über die vorgenannte Seitenfläche vorstehenden Verbindungsbereichs des Schaufelblatts in den profilierten Durchbruch der Stützplatte und Verbinden des Verbindungsbereichs des Schaufelblatts mit der Stützplatte sowie Verbinden der Stützplatte mit dem Deckband. Durch ein derartiges Stützen des Schaufelblatts im Bereich des Deckbandes läßt sich die Schwingfestigkeit einer gebauten Leitschaufel erhöhen und jene einer konventionell hergestellten Leitschaufel erreichen.

Es ist bevorzugt, daß das Schaufelblatt über seine gesamte Länge zweidimensional profiliert bzw. prismatisch ausgebildet wird , wobei das Schaufelblatt dabei zweckmäßigerweise durch Strangpressen hergestellt wird.

Alternativ kann es vorteilhaft sein, daß eine Blattoberfläche des Schaufelblatts dreidimensional profiliert ausgebildet wird.

Höchst bevorzugt wird der profilierte Durchbruch in dem Deckband und der Stützplatte durch (Hochdruck-)Laserstrahlschneiden ausgebildet, da sich mit diesem Verfahren, im Gegensatz z.B. zum Stanzen, Durchbrüche mit reproduzierbaren Geometrien ohne Verformen der angrenzenden Randzonen herstellen lassen. Nach dem Laserstrahlschneiden kann es erforderlich sein, daß die Strahlaustrittsseite entgratet werden muß. Mit dem Laserstrahlschneiden lassen sich auch die verhältnismäßig kleinen Radien an den Ein- und Austrittskanten des profilierten Durchbruchs von etwa 0,1 bis 0,2 mm herstellen. Es hat sich gezeigt, daß das Stanzen der profilierten Durchbrüche aufgrund des großen Verhältnisses von der Wandstärke des Deckbandes, etwa 2 bis 3 mm, zu den Radien an den Ein- und Austrittskanten der Durchbrüche nicht geeignet bzw. möglich ist.

Alternativ kann es vorteilhaft sein, daß der profilierte Durchbruch durch Wasserstrahlschneiden ausgebildet wird, da auch mit diesem Verfahren bzw. mit wasserstrahlgeführten Laserstrahlschneiden die Ausbildung der relativ kleinen Radien von etwa 0,1 bis 0,2 mm an den Ein- und Austrittskanten des profilierten Durchbruchs möglich ist.

Höchst bevorzugt erfolgt das Verbinden des Schaufelblatts und des Deckbands sowie der Stützplatte durch Hochtemperatur-Löten, wobei es zur Verbesserung der Lötqualität vorteilhaft ist, daß das Deckband samt Stützplatte nach dem Ausbilden des profilierten Durchbruchs und/oder der Verbindungsbereich des Schaufelblatts chemisch oder galvanisch vernickelt wird.

Bspw. für den Einsatz in Hochdruckverdichtern von Flugtriebwerken können das Schaufelblatt und/oder das Deckband samt Stützplatte bevorzugt aus einer Nickel-Basislegierung bestehen. Das Verfahren läßt sich bevorzugt auch bei Werkstoffen wie Fe- oder Ti-Legierungen oder TiAl anwenden.

In alternativen Anwendungen, z.B. für die Vorauslegung in Prüfständen, kann es zweckmäßig sein, daß das Schaufelblatt und/oder das Deckband samt Stützplatte aus Kunststoff bestehen, wobei das Verbinden des Schaufelblatts mit dem Deckband und der Stützplatte dann bevorzugt durch Kleben od.dgl. erfolgt.

In einer bevorzugten Ausgestaltung ist das Deckband ein Außendeckband, das U-förmig ausgebildet ist.

In einer bevorzugten Ausgestaltung wird das Schaufelblatt mit zwei an gegenüberliegenden Enden stirnseitig angeordneten, zweidimensionalen Verbindungsbereichen ausgebildet, die mit einem Außendeckband und zusätzlich mit einem Innendeckband verbunden werden. Das Schaufelblatt ist dabei jeweils stirnseitig zur Verbindung mit dem Außen- und Innendeckband zweidimensional profiliert und kann im Bereich der Blattoberfläche zwei- oder dreidimensional profiliert sein. Bevorzugt wird auf eine Seitenfläche des Innendeckbands eine Wabendichtung bzw. Honigwaben aufgebracht und durch HT-Löten gefügt.

Bevorzugt wird eine Vielzahl von Schaufelblättern vorgesehen, wobei das Verfahren dann mit Schritt abgeschlossen wird: Segmentieren des gebauten Leitkranzes durch Trennschleifen, Drahterodieren od. dgl. In einer solchen Ausgestaltung ist das Deckband ringförmig ausgebildet und weist eine der Anzahl der Schaufelblätter entsprechende Anzahl von profilierten Durchbrüchen auf, die abschließend zu Segmenten mit z.B. vier oder sechs Schaufelblättern getrennt werden.

Der den gebauten Leitkranz betreffende Teil der Lösung ist erfindungsgemäß dadurch gekennzeichnet, daß an dem mit einem Durchbruch versehenen Deckband eine Stützplatte mit einem weiteren Durchbruch angeordnet ist, und das Schaufelblatt mit seinem Verbindungsbereich in beide Durchbrüche eingesetzt und damit verbunden ist, wobei auch die Stützplatte und das Deckband verbunden sind.

in einer bevorzugten Ausgestaltung ist der profilierte Durchbruch in dem Deckband und der Stützplatte mittels Laserstrahlschneiden ausgebildet, da sich hiermit die vergleichsweise kleinen Radien von etwa 0,1 bis 0,2 mm an der Ein- und Austrittskante des profilierten Durchbruchs reproduzierbar und ohne Verformen der angrenzenden Randbereiche ausbilden lassen.

Bevorzugt ist das Schaufelblatt mittels Hochtemperatur-Löten mit dem Deckband und der Stützplatte verbunden, wobei es vorteilhaft ist, daß das Deckband samt Stützplatte und/oder der Verbindungsbereich des Schaufelblatts vernickelt ist.

Höchst bevorzugt weist das Schaufelblatt an zwei gegenüberliegenden Enden, stirnseitig ausgebildete, zweidimensional profilierte Verbindungsbereiche auf, die mit einem Außendeckband und zusätzlich einem Innendeckband verbunden sind.

Weitere Ausgestaltungen der Erfindung sind in den Unteransprüchen beschrieben.

Im folgenden wird die Erfindung anhand von Ausführungsbeispielen unter Bezugnahme auf eine Zeichnung näher erläutert. Es zeigt:
- Fig. 1: eine schematische Seitenansicht eines Ausführungsbeispieles von einem gebauten Leitkranz,
- Fig. 2: eine schematische Seitenansicht eines Ausführungsbeispiels von einem erfindungsgemäßen gebauten Leitkranz und
- Fig. 3: eine schematische Draufsicht auf ein Deckband.

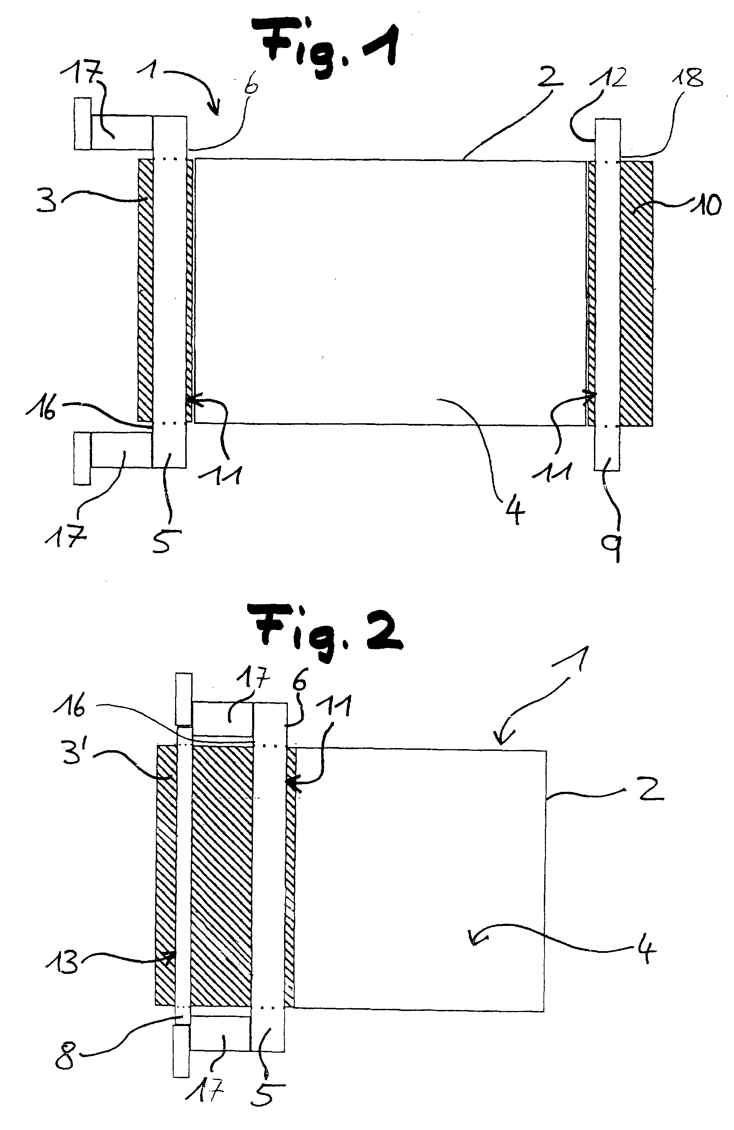

Fig. 1 zeigt eine schematische, zur besseren Übersicht auf die wesentlichen Teile beschränkte Seitenansicht eines im ganzen mit 1 bezeichneten gebauten Leitkranzes, der z.B. in einem Hochdruckverdichter von Flugtriebwerken eingesetzt wird. Der gebaute Leitkranz 1 umfaßt ein Schaufelblatt 2 mit zwei an stirnseitig gegenüberliegenden Enden des Schaufelblatts 2 vorgesehenen Verbindungsbereichen 3 und 10 und einer Blattoberfläche 4 sowie ein ringförmiges Außendeckband 5 und ein ringförmiges Innendeckband 9, die z.B. durch Drehen hergestellt sind. Der gebaute Leitkranz 1 besteht aus einer Nickel-Basislegierung. Alternativ kann er z.B. auch aus einer Ti-Legierung oder aus TiAI bestehen.

Während die beiden Verbindungsbereiche 3,10 zweidimensional ausgebildet sind, weist der restliche Teil des Schaufelblatts 2 ein dreidimensionales Profil auf. Das Schaufelblatt 2 wird in der vorliegenden Ausgestaltung durch Fräsen hergestellt.

Alternativ könnte das Schaufelblatt 2 über seine gesamte Länge zweidimensional profiliert sein und z.B. durch Strangpressen kostengünstig hergestellt werden.

Das Außen- und Innendeckband 5 bzw. 9 weist jeweils eine nach innen gewandte Seitenfläche 6 bzw. 12 auf, in der jeweils profilierte Durchbrüche 11 mittels Strahlschneiden ausgebildet werden. Die profilierten Durchbrüche 11 werden entlang des jeweiligen Deckbands 5 bzw. 9 äquidistant ausgebildet, wobei je nach Anwendung auch eine unregelmäßige Teilung vorgesehen werden kann, und weisen eine dem Profil der Verbindungsbereiche 3,10 des Schaufelblatts 2 entsprechende Form auf. Aus aerodynamischen Gründen weisen die profilierten Durchbrüche 11 daher im Bereich einer Ein- und Austrittskante 14 bzw. 15 vergleichsweise kleine Radien von etwa 0,1 bis 0,2 mm auf, wobei die Wandstärken des Außen- und Innendeckbandes 5,9 im allgemeinen etwa 2 bis 3 mm betragen. Um die profilierten Durchbrüche 11 mit ihren kleinen Radien an der Ein- und Austrittskante 14,15 reproduzierbar und ohne Verformungen in den an die profilierten Durchbrüche 11 angrenzenden Bereichen des Außen- und Innendeckbands 5,9 herstellen zu können, werden diese mittels Laserstrahlschneidens ausgebildet.

Bei einer Variante erfolgt die Ausbildung mittels Hochdruck-Laserstrahlschneiden unter Einsatz eines inerten Schneidgases, wie z.B. N₂. Auf diese Weise entstehen metallisch blanke Schnittflächen, die für den späteren Fügeprozeß, z.B. mittels Vakuum-Hochtemperatur-Löten, vorteilhaft sind. Nach dem Laserstrahlschneiden muß die Strahlaustrittsseite, d.h. eine der jeweils nach innen gewandten Seitenfläche 6,12 des Außen- und Innendeckbands 5,9 gegenüberliegende Seitenfläche 16, gegebenenfalls entgratet werden.

Im Anschluß an das Ausbilden der profilierten Durchbrüche 11 mittels Laserstrahlschneiden werden die beiden Deckbänder 5,9 vollständig (chemisch oder galvanisch) vernickelt, um die Qualität der Lötnaht beim anschließenden Verbinden der Schaufelblätter 2 mit dem Außen- und Innendeckband 9 zu verbessern. Aus diesem Grund werden auch die beiden Verbindungsbereiche 3,10 des Schaufelblatts 2 vernickelt.

Vor dem Hochtemperatur-Löten werden die Schaufelblätter 2 mit ihren Verbindungsbereichen 3,10 in die im Außen- und Innendeckband 5,9 ausgebildeten profilierten Durchbrüche 11 eingefügt und z.B. durch Kugelpunkt-Heftschweißen oder ein anderes geeignetes Verfahren fixiert. Anschließend wird die Lötpaste jeweils in den Verbindungszonen aufgebracht und die Schaufelblätter 2 mit den Deckbändern 5,9 durch Hochtemperatur-Löten verbunden.

Nach der Einstreichlötung wird das Innendeckband 9 an seiner der nach innen gewandten Seitenfläche 12 gegenüberliegenden Seitenfläche 18 geschliffen oder ggf. auch gedreht. Anschließend werden auf die Seitenfläche 18 Wabendichtungen aufgebracht und mittels HO-Löten damit verbunden, wobei die Arbeitstemperatur des Lots für die Wabendichtung unterhalb der Aufschmelztemperatur des Lots für die Einstecklötung liegt.

Bei der in Fig. 2 gezeigten, erfindungsgemäßen Ausgestaltung eines gebauten Leitkranzes 1 ist an der dem Schaufelblatt 2 abgewandten Seitenfläche 16 des Außendeckbands 5 eine Stützplatte 8 vorgesehen, in der jeweils mit den profilierten Durchbrüchen 11 in dem Außendeckband 5 fluchtende profilierte Durchbrüche 13 ausgebildet werden. Diese profilierten Durchbrüche 13 können ebenfalls durch Laserstrahlschneiden hergestellt werden, wobei hier auch ein anderes Verfahren, wie z.B. Stanzen möglich ist. Der zweidimensionale Verbindungsbereich 3' des Schaufelblatts 2 ist in dieser Ausgestaltung verlängert und wird jeweils in den profilierten Durchbruch 11 des Außendeckbands 5 und dann in den profilierten Durchbruch 13 der Stützplatte 8 eingefügt und damit durch Hochtemperatur-Löten in der oben beschriebenen Weise verbunden. Ebenso wird die Stützplatte 8 mit den beiden Schenkeln 14 des U-förmigen Außendeckbands 5 verbunden. Die Stützplatte 8 kann als durchgehendes Band oder als jeweils im Bereich der profilierten Durchbrüche 11 des Außendeckbands 5 angeordnete Einzelplatten vorgesehen sein. Eine solche Stützplatte 8 kann bei einem gebauten Leitkranz 1 mit oder ohne Innendeckband 9 vorgesehen werden.

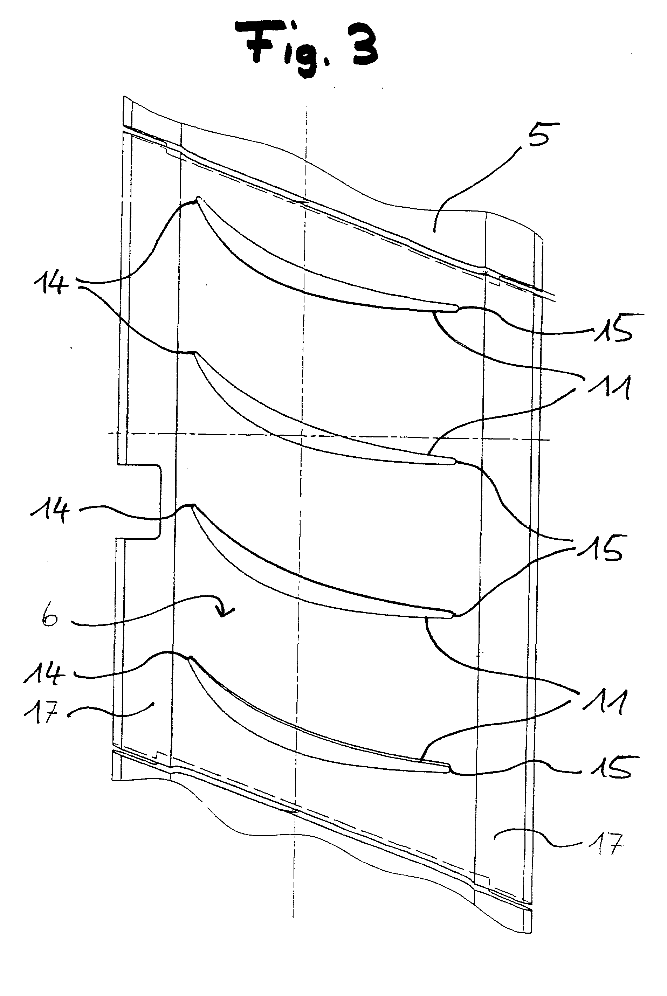

Fig. 3 zeigt eine Draufsicht auf einen Abschnitt des Außendeckbands 5 mit seiner inneren Seitenfläche 12 und den beiden Schenkeln 17, die hinter der Bildebene liegen. Die profilierten Durchbrüche 11 werden entlang des Außendeckbands 5 äquidistant vorgesehen und weisen an ihren Ein- und Austrittskanten 14 bzw. 15 vergleichsweise kleine Radien von etwa 0,1 bis etwa 0,2 mm auf. Die Wandstärke des Außendeckbands 5 beträgt etwa 2 bis 3 mm. Die profilierten Durchbrüche 11 werden mittels Laserstrahlschneiden reproduzierbar und ohne Verformungen der angrenzenden Randbereiche des Außendeckbands 5 ausgebildet. Dabei können die Radien an der Ein- und Austrittskante 14 bzw. 15 geringfügig aufgeweitet werden, ohne daß die Qualität des anschließenden Lötschrittes negativ beeinflußt wird.

Die mit ringförmigen Außen- und ggf. Innendeckbänder 5 bzw. 9 hergestellten gebauten Leitkränze 1 können abschließend halbiert oder zu Segmenten mit z.B. vier oder sechs Schaufelblättern 2 durch Drahterodieren, Trennschleifen oder ein anderes geeignetes Verfahren getrennt werden. Alternativ kann der gebaute Leitkranz 1 auch zu Einzelleitschaufeln 2 segmentiert werden.

## Patentansprüche

1. Herstellungsverfahren für einen gebauten Leitkranz (1) einer Gasturbine, insbesondere eines Flugtriebwerks, bei dem wenigstens ein Deckband (5, 9) und wenigstens ein Schaufelblatt (2) vorgesehen wird, und bei dem wenigstens ein profilierter Durchbruch (11) in dem Deckband (5, 9) mittels Strahlschneiden, ausgebildet wird, sowie das Schaufelblatt (2) mit wenigstens einem stirnseitigen, zweidimensional profilierten Verbindungsbereich (3, 10) ausgebildet wird, **gekennzeichnet durch** die Schritte: Vorsehen einer Stützplatte (8) an der dem Schaufelblatt (2) abgewandten Seitenfläche (16) des Deckbands (5, 9), Ausbilden eines mit dem profilierten Durchbruch (11) in dem Deckband (5, 9) fluchtenden, profilierten Durchbruchs (13) in der Stützplatte (8), Einfügen des über die Seitenfläche (16) vorstehenden Verbindungsbereichs (3) des Schaufelblatts (2) in den profilierten Durchbruch (13) der Stützplatte (8) und Verbinden des Verbindungsbereichs (3,10) mit der Stützplatte (8) sowie der Stützplatte (8) mit dem Deckband (5,9).

2. Verfahren nach Anspruch 1, **dadurch gekennzeichnet, daß** das Schaufelblatt (2) über seine gesamte Länge zweidimensional profiliert ausgebildet wird.

3. Verfahren nach Anspruch 1, **dadurch gekennzeichnet, daß** eine Blattoberfläche (4) des Schaufelblatts (2) dreidimensional profiliert ausgebildet wird.

4. Verfahren nach einem oder mehreren der vorhergehenden Ansprüche, **dadurch gekennzeichnet, daß** das Schaufelblatt (2) durch Fräsen oder Profilschleifen ausgebildet wird.

5. Verfahren nach Anspruch 1 oder 2, **dadurch gekennzeichnet, daß** das Schaufelblatt (2) durch Strangpressen hergestellt wird.

6. Verfahren nach einem oder mehreren der vorherigen Ansprüche, **dadurch gekennzeichnet, daß** der profilierte Durchbruch (11,13) durch Laserstrahl-schneiden ausgebildet wird.

7. Verfahren nach einem oder mehreren der Ansprüche 1 bis 5, **dadurch gekennzeichnet, daß** der profilierte Durchbruch (11,13) durch Wasserstrahlschneiden ausgebildet wird.

8. Verfahren nach einem oder mehreren der vorhergehenden Ansprüche, **dadurch gekennzeichnet, daß** das Deckband (5,9) und die Stützplatte (8) nach dem Ausbilden des profilierten Durchbruchs (11,13) und/oder der Verbindungsbereich (3,10) des Schaufelblatts (2) vernickelt wird.

9. Verfahren nach einem oder mehreren der vorhergehenden Ansprüche, **dadurch gekennzeichnet, daß** das Verbinden des Schaufelblatts (2) und des Deckbands (5,9) einschließlich der Stützplatte (8) durch Hochtemperatur-Löten erfolgt.

10. Verfahren nach einem oder mehreren der vorhergehenden Ansprüche, **dadurch gekennzeichnet, daß** das Schaufelblatt (2) und/oder das Deckband (5,9) aus einer Nickel-Basislegierung oder einer Ti-Legierung bestehen.

11. Verfahren nach einem oder mehreren der Ansprüche 1 bis 9, **dadurch gekennzeichnet, daß** das Schaufelblatt (2) und/oder das Deckband (5,9) aus Kunststoff bestehen.

12. Verfahren nach Anspruch 11, **dadurch gekennzeichnet, daß** das Verbinden des Schaufelblatts (2) und des Deckbands (5,9) durch Kleben erfolgt.

13. Verfahren nach einem oder mehreren der vorhergehenden Ansprüche, **dadurch gekennzeichnet, daß** das Deckband (5,9) ein Außendeckband ist.

14. Verfahren nach einem oder mehreren der vorhergehenden Ansprüche, **dadurch gekennzeichnet, daß** das Schaufelblatt (2) mit zwei an gegenüberliegenden Enden stirnseitig angeordneten, zweidimensionalen Verbindungsbereichen (3,10) ausgebildet wird, die mit einem Außendeckband (5) und zusätzlich einem Innendeckband (9) verbunden werden.

15. Verfahren nach einem oder mehreren der vorhergehenden Ansprüche, bei dem eine Vielzahl von Schaufelblättern (2) vorgesehen und jeweils mit dem Deckband (5,9) verbunden wird, **gekennzeichnet durch** den abschließenden Schritt: Segmentieren des gebauten Leitkranzes (1), z.B. **durch** Trennschleifen oder Drahterodieren.

16. Gebauter Leitkranz (1) für eine Gasturbine, insbesondere ein Flugtriebwerk, mit wenigstens einem Deckband (5, 9) und wenigstens einem daran angeordneten Schaufelblatt (2), wobei das Schaufelblatt (2) stirnseitig wenigstens einen zweidimensional profilierten Verbindungsbereich (3,10) aufweist, der in einen mittels Strahlschneiden in dem Deckband (5, 9) ausgebildeten, profilierten Durchbruch (11) eingesetzt und damit verbunden ist, **dadurch gekennzeichnet, daß** an der dem Schaufelblatt (2) abgewandten Seitenfläche (16) des Deckbands (5, 9) eine Stützplatte (8) angeordnet ist, die eine mit dem profilierten Durchbruch (11) in dem Deckband (5, 9) fluchtenden, profilierten Durchbruch (13) aufweist, in den der Verbindungsbereich (3,10) des Schaufelblatts (2) eingesetzt ist, wobei der Verbindungsbereich (3,10) mit der Stützplatte (8) und die Stützplatte (8) mit dem Deckband (5, 9) verbunden ist.

17. Gebauter Leitkranz nach Anspruch 16, **dadurch gekennzeichnet, daß** der profilierte Durchbruch (11, 13) mittels Laserstrahlschneiden ausgebildet ist.

18. Gebauter Leitkranz nach Anspruch 16 oder 17, **dadurch gekennzeichnet, daß** das Schaufelblatt (2) mittels Hochtemperatur-Löten mit dem Deckband (5, 9) und der Stützplatte (8) verbunden ist.

19. Gebauter Leitkranz nach einem oder mehreren der Ansprüche 16 bis 18, **dadurch gekennzeichnet, daß** das Deckband (5, 9) und die Stützplatte (8) und/oder der Verbindungsbereich (3,10) des Schaufelblatts (2) vernickelt ist.

20. Gebauter Leitkranz nach einem oder mehreren der Ansprüche 16 bis 19, **dadurch gekennzeichnet, daß** das Deckband (5,9) ein Außendeckband ist.

21. Gebauter Leitkranz nach einem oder mehreren der Ansprüche 16 bis 20, **dadurch gekennzeichnet, daß** das Schaufelblatt (2) zwei an gegenüberliegenden Enden stirnseitig ausgebildete, zweidimensional profilierte Verbindungsbereiche (3,10) aufweist, die mit einem Außendeckband (5) und zusätzlich einem Innendeckband (9) verbunden sind.

22. Gebauter Leitkranz nach einem oder mehreren der Ansprüche 16 bis 21, **dadurch gekennzeichnet, daß** eine Blattoberfläche (4) des Schaufelblatts (2) dreidimensional profiliert ausgebildet ist.

## Claims

1. Production method for an assembled nozzle ring (1) of a gas turbine, in particular of an aircraft engine in which at least one shroud (5, 9) and at least one blade (2) are provided, and which at least one profiled opening (11) is formed in the shroud (5, 9) by means of beam cutting, and the blade (2) is formed with at least one end face, two-dimensional profiled connecting region (3, 10), **characterised by** the steps: providing a support plate (8) at the side face (16) of the shroud (5, 9) remote from the blade (2), forming a profiled opening (13) flush with the profiled opening (11) in the shroud (5, 9) in the support plate (8), inserting the connecting region (3) of the blade (2) projecting over the side face (16) into the profiled opening (13) of the support plate (8) and connecting the connecting region (3, 10) to the support plate (8) and the support plate (8) to the shroud (5, 9).

2. Method according to claim 1, **characterised in that** the blade (2) is formed so as to be two-dimensionally profiled over its entire length.

3. Method according to claim 1, **characterised in that** a blade surface (4) of the blade (2) is formed so as to be three-dimensionally profiled.

4. Method according to one or more of the preceding claims, **characterised in that** the blade (2) is formed by milling or profile grinding.

5. Method according to claim 1 or 2, **characterised in that** the blade (2) is produced by extrusion.

6. Method according to one or more of the preceding claims, **characterised in that** the profiled opening (11, 13) is formed by laser beam cutting.

7. Method according to one or more of claims 1 to 5, **characterised in that** the profiled opening (11, 13) is formed by water jet cutting.

8. Method according to one or more of the preceding claims, **characterised in that** the shroud (5, 9) and the support plate (8) are nickel-plated after the formation of the profiled opening (11, 13) and/or of the connecting region (3, 10) of the blade (2).

9. Method according to one or more of the preceding claims, **characterised in that** the blade (2) and the shroud (5, 9) including the support plate (8) are connected by high-temperature soldering.

10. Method according to one or more of the preceding claims, **characterised in that** the blade (2) and/or the shroud (5, 9), consist of a nickel based alloy or a titanium alloy.

11. Method according to one or more of daims 1 to 9, **characterised in that** the blade (2) and/or the shroud (5, 9) consist of plastics material.

12. Method according to claim 11, **characterised in that** the blade (2) and the shroud (5, 9) are connected by adhesion.

13. Method according to one or more of the preceding claims, **characterised in that** the shroud (5, 9) is an outer shroud.

14. Method according to one or more of the preceding claims, **characterised in that** the blade (2) is formed with two two-dimensional connecting regions (3, 10) arranged at the end face on opposing ends, the connecting regions being connected to an outer shroud (5) and also to an inner shroud (9).

15. Method according to one or more of the preceding claims, in which a large number of blades (2) are provided and connected in each case to the shroud (5, 9), **characterised by** the concluding step: segmenting the assembled nozzle ring (1), for example by abrasive cutting or wire-EDM.

16. Assembled nozzle ring (1) for a gas turbine, in particular an aircraft engine, with at least one shroud (5, 9) and at least one blade (2) arranged thereon, the blade (2) having at least one two-dimensionally profiled connecting region (3, 10) at the end face, which is inserted into a profiled opening (11) formed in the shroud (5, 9) by means of beam cutting and connected thereto, **characterised in that** arranged on the side face (16) of the shroud (5, 9) remote from the blade (2) is a support plate (8) which has a profiled opening (13) flush with the profiled opening (11) in the shroud (5, 9), into which opening the connecting region (3, 10) of the blade (2) is inserted, the connecting region (3, 10) being connected to the support plate (8) and the support plate (8) to the shroud (5, 9).

17. Assembled nozzle ring according to claim 16, **characterised in that** the profiled opening (11, 13) is formed by means of laser beam cutting.

18. Assembled nozzle ring according to claim 16 or 17, **characterised in that** the blade (2) is connected by means of high-temperature soldering to the shroud (5, 9) and the support plate (8).

19. Assembled nozzle ring according to one or more of claims 16 to 18, **characterised in that** the shroud (5, 9) and the support plate (8) and/or the connecting region (3, 10) of the blade (2) are nickel-plated.

20. Assembled nozzle ring according to one or more of claims 16 to 19, **characterised in that** the shroud (5, 9) is an outer shroud.

21. Assembled nozzle ring according to one or more of claims 16 to 20, **characterised in that** the blade (2) has two two-dimensionally profiled connecting regions (3, 10) formed at the end face on opposing ends, the connecting regions being connected to an outer shroud (5) and also to an inner shroud (9).

22. Assembled nozzle ring according to one or more of claims 16 to 21, **characterised in that** a blade surface (4) of the blade (2) is formed so as to be three-dimensionally profiled.

## Revendications

1. Procédé de fabrication pour une couronne directrice (1) construite d'une turbine à gaz, en particulier d'un turboréacteur, dans lequel au moins une bande de revêtement (5, 9) et au moins une ailette (2) sont prévues, et dans lequel au moins un passage (11) profilé est réalisé dans la bande de revêtement (5, 9) par découpage au faisceau, et l'ailette (2) étant réalisée avec au moins une zone de liaison (3,10) côté avant et profilée dans deux dimensions, **caractérisé par** les étapes suivantes : révision d'une plaque de soutien (8) sur la surface latérale (16), opposée à l'ailette (2), de la bande de revêtement (5, 9), réalisation d'un passage profilé et aligné avec le passage (11) profilé dans la bande de revêtement (5, 9) dans la plaque de soutien (8), insertion de la zone de liaison (3) dépassant de la surface latérale (16) de l'ailette (2) dans le passage (13) profilé de la plaque de soutien (8) et connexion de la zone de liaison (3, 10) avec la plaque de soutien (8) et la bande de revêtement (5, 9).

2. Procédé selon la revendication 1, **caractérisé en ce que** l'ailette (2) est conçue de façon profilée en deux dimensions sur toute sa longueur.

3. Procédé selon la revendication 1, **caractérisé en ce qu'**une surface de pale de l'ailette (2) est conçue de façon profilée en trois dimensions.

4. Procédé selon l'une quelconque ou plusieurs des revendications précédentes, **caractérisé en ce que** l'ailette (2) est formée par fraisage ou rectification de profil.

5. Procédé selon la revendication 1 ou 2, **caractérisé en ce que** l'ailette (2) est fabriquée par extrusion.

6. Procédé selon l'une quelconque ou plusieurs des revendications précédentes, **caractérisé en ce que** le passage (11, 13) profilé est réalisé par découpage au faisceau laser.

7. Procédé selon l'une quelconque ou plusieurs des revendications 1 à 5, **caractérisé en ce que** le passage (11, 13) profilé est réalisé par découpage au jet d'eau.

8. Procédé selon l'une quelconque ou plusieurs des revendications précédentes, **caractérisé en ce que** la bande de revêtement (5, 9) et la plaque de soutien (8) après la réalisation du passage (11, 13) profilé et/ou la zone de liaison (3, 10) de l'ailette (2) sont nickelées.

9. Procédé selon l'une quelconque ou plusieurs des revendications précédentes, **caractérisé en ce que** la liaison de l'ailette (2) et de la bande de revêtement (5, 9), y compris la plaque de soutien (8), s'effectue par brasage à haute température.

10. Procédé selon l'une quelconque ou plusieurs des revendications précédentes, **caractérisé en ce que** l'ailette (2) et/ou la bande de revêtement (5, 9) sont à base d'un alliage de base de nickel ou d'un alliage de titane.

11. Procédé selon l'une quelconque ou plusieurs des revendications 1 à 9, **caractérisé en ce que** l'ailette (2) et/ou la bande de revêtement (5, 9) sont à base de matériau synthétique.

12. Procédé selon la revendication 11, **caractérisé en ce que** la liaison de l'ailette (2) et de la bande de revêtement (5, 9) s'effectue par collage.

13. Procédé selon l'une quelconque ou plusieurs des revendications précédentes, **caractérisé en ce que** la bande de revêtement (5, 9) est une bande de revêtement extérieure.

14. Procédé selon l'une quelconque ou plusieurs des revendications précédentes, **caractérisé en ce que** l'ailette (2) est conçue avec des zones de liaison (3, 10) en deux dimensions et disposées côté avant sur des extrémités opposées, lesquelles zones sont reliées à une bande de revêtement extérieure (5) et en supplément à une bande de revêtement intérieure (9).

15. Procédé selon l'une quelconque ou plusieurs des revendications précédentes, dans lequel un grand nombre d'ailettes (2) sont prévues et sont reliées respectivement à la bande de revêtement (5, 9), **caractérisé par** l'étape définitive : segmentation de la couronne directrice (1) construite, par exemple par tronçonnage à la meule ou érodage par fil.

16. Couronne directrice (1) construite pour une turbine à gaz, en particulier un turboréacteur, avec au moins une bande de revêtement (5, 9) et au moins une ailette (2) disposée dessus, l'ailette (2) présentant côté avant au moins une zone de liaison (3, 10) profilée en deux dimensions, qui est insérée dans un passage (11) profilé et réalisé par découpage au faisceau dans la bande de revêtement (5, 9) et est reliée à ce passage, **caractérisée en ce que** sur la surface latérale (16), opposée à l'ailette (2), de la bande de revêtement (5, 9) est disposée une plaque de soutien (8) qui présente un passage (13) profilé et aligné avec le passage (11) profilé dans la bande de revêtement (5, 9), passage dans lequel la zone de liaison (3, 10) de l'ailette (2) est insérée, la zone de liaison (3, 10) étant reliée à la plaque de soutien (8) et la plaque de soutien (8) étant reliée à la bande de revêtement (5, 9).

17. Couronne directrice construite selon la revendication 16, **caractérisé en ce que** le passage (11, 13) profilé est conçu par découpage au faisceau laser.

18. Couronne directrice construite selon la revendication 16 ou 17, **caractérisé en ce que** l'ailette (2) est reliée par brasage à haute température à la bande de revêtement (5, 9) et à la plaque de soutien (8).

19. Couronne directrice construite selon l'une quelconque ou plusieurs des revendications 16 à 18, **caractérisé en ce que** la bande de revêtement (5, 9) et la plaque de soutien (8) et/ou la zone de liaison (3, 10) de l'ailette (2) sont nickelées.

20. Couronne directrice construite selon l'une quelconque ou plusieurs des revendications 16 à 19, **caractérisée en ce que** la bande de revêtement (5, 9) est une bande de revêtement extérieure.

21. Couronne directrice construite selon l'une quelconque ou plusieurs des revendications 16 à 20, **caractérisée en ce que** l'ailette (2) présente deux zones de liaison (3, 10) profilées en deux dimensions et réalisées côté avant sur des extrémités opposées, lesquelles zones sont reliées à une bande de revêtement extérieure (5) et en supplément à une bande de revêtement intérieure (9).

22. Couronne directrice construite selon l'une quelconque ou plusieurs des revendications 16 à 21, **caractérisée en ce qu'**une surface de pale (4) de l'ailette (2) est conçue de façon profilée en trois dimensions.
